# EUROPÄISCHE PATENTSCHRIFT

(11) **EP 0 954 077 B1**
(45) Veröffentlichungstag und Bekanntmachung des Hinweises auf die Patenterteilung: **12.01.2005**
(21) Anmeldenummer: 99104080.9
(22) Anmeldetag: 18.03.1999
(51) Int. Cl.: H02G 3/04

(54) **Rohranordnung**
Conduit arrangement
Assemblage de conduits

(30) Priorität: 03.04.1998 DE 19815137
(43) Veröffentlichungstag der Anmeldung: 03.11.1999
(73) Patentinhaber: Fränkische Rohrwerke Gebr. Kirchner GmbH & Co., 97486 Königsberg/Bayern (DE)
(72) Erfinder: Margot, Christian, 25000 Besancon (FR)
(74) Vertreter: Schwabe - Sandmair - Marx

(56) Entgegenhaltungen:
- DE-A- 19 600 812
- DE-U- 1 827 861
- NL-A- 7 603 441
- US-A- 3 727 953
- US-A- 4 986 575

## Beschreibung

Die Erfindung betrifft eine Rohranordnung mit einem gewellten Rohr, das in Axialrichtung einen Schlitz aufweist, gemäß dem Oberbegriff des Patentanspruchs 1, wie ein derartiges Rohr beispielsweise aus der EP 0 268 869 B1 bekannt ist.

Die vorliegende Erfindung, wie auch der gattungsgemäße Stand der Technik sind insbesondere auf Schutzrohranordnungen gerichtet, die beim Kraftfahrzeugbau eingesetzt werden, um elektrische Leitungen und dgl. zu schützen und zu verlegen. Dabei haben sich diverse Probleme ergeben, die nachfolgend erörtert werden sollen.

Die WO 97/32379 offenbart ein Schutzrohr, bei dem ein Schlitz vorgesehen ist, der durch einen innen überlappend vorgesehen Abschnitt verkleidet wird. Diese Art von Schutzrohr für elektrische Kabel hat den Nachteil, daß entlang des Schlitz- und Überlappungsbereiches eine starke Versteifung des Rohres auftritt, so daß, wenn das Rohr beispielsweise im Motorraum eines PKW's gebogen verlegt wird, das Rohr auseinanderklafft und die zu schützenden elektrischen Kabel Umwelteinflüssen aussetzt. Ferner ist es bei dieser Anordnung problematisch elektrische Leitungen aus diesem Schutzrohr über den Schlitz herauszuleiten, da der Abdeckungsabschnitt für den Schlitz die elektrischen Leitungen punktuell stark belastet und gerade auch unter Einwirkung der großen Temperaturschwankungen und der Vibrationen im Motorraum dazu führt, daß die leitenden Adern der elektrischen Kabel freigelegt werden können, was gerade bei modernen Fahrzeugen besonders problematisch sein kann, da hier elektrische und elektronische Steuerleitungen vorgesehen sein können, die für das problemlose funktionieren des Fahrzeuges verantwortlich sind. Außerdem ist es äußerst umständlich, diese Art von Rohr herzustellen, da der abdeckende Bereich zugleich mit dem Rohr als geschlossene Form hergestellt werden muß und anschließend einseitig gesägt werden muß, um den Schlitz zu öffnen. Anschließend muß das Rohr wieder stark erhitzt werden und das Rohr muß im erhitzten, wenigstens teilweise weichplastischem Zustand zusammengepreßt werden, um den Schlitz zu schließen, so daß der Überlappungsbereich seine Abdeckfunktion ausführen kann. Diese Art der Herstellung ist langwierig und kostenintensiv und das Ergebnis vermag den Kostenaufwand in keiner Weise zu rechtfertigen. Die Kabel sind wegen der Überlappung nur schwer bzw. mit einem Hilfswerkzeug einzulegen.

Aus der DE 196 24 984 A 1 ist ein Rohr mit axialem Schlitz bekannt, bei dem der Schlitz einen Verlauf aufweist, der von einer geraden Linie abweicht. Hier wird z.B. eine Schlangenlinie als praktikabel angesehen. Jedoch treten auch hier Verformungen auf, die aufgrund der Schlangenlinie im Rohr veranlaßt sind. Es ist bei dieser Art von Rohranordnung auch äußerst schwierig einen Schlitz einzubringen, der von dem Verlauf einer geraden Linie abweicht. Hier müssen spezielle Werkzeuge eingesetzt werden, die zudem vergleichsweise langsam arbeiten. Auch hier ist der Herstellungsaufwand nicht durch das Ergebnis zu rechtfertigen und die Kabel sind wegen der Überlappung nur schwer und mit einem Hilfswerkzeug einzulegen.

Aus der EP 0 750 378 A1 ist des weiteren ein Umhüllungskanal zur Ummantelung von Kabelbündeln bekannt, der in seiner Längsrichtung geschlitzt ist, wobei ein aufwendiger Verschlußmechanismus entlang des Schlitzes ausgebildet ist. Auch hier ist eine Versteifung des Schutzrohres über die gesamte Länge vorhanden, die unakzeptabel ist.

Auch die EP 0 114 213 A2 offenbart ein Schutzrohr mit einem komplizierten hakenartigen Verschluß. Die DE 44 10 706 A1 offenbart auch ein Rohr, insbesondere einen Wellschlauch, der mit aufwendigen Verschlußmechanismen versehen ist.

Die US-A 4,986,575 offenbart die gleiche Rohranordnung wie der gattungsgemäße Stand der Technik, wobei aber dort wie hier das äußere Schutzrohr durchgehend sein muss, um einen sicheren Verschluß erzielen zu können. Dies führt zu einem großen Kunststoffverbrauch und zu Rohranordnungsversteifungen.

Der gattungsgemäße Stand der Technik offenbart eine Schutzrohranordnung für Leitungen und insbesondere für elektrische Leitungen, wobei zwei geschlitzte Wellrohre ineinander gesteckt werden, so daß das innere oder äußere Schutzrohr den Schlitz im jeweils anderen Schutzrohr abdeckt. Diese Art von Schutzrohranordnung ist zwar sehr vorteilhaft im Hinblick auf den Schutz, der den elektrischen Leitungen gewährt wird, wobei auch Verformungen dieser Schutzrohranordnung entlang des Schlitzes nicht auftreten können, so daß ein Einquetschen und ungewolltes Abisolieren von elektrischen Kabeln nicht möglich ist, jedoch erfordert diese Art von Schutzrohranordnung einen vergleichsweise hohen Aufwand an Kunststoffmaterial bei der Herstellung und erfordert gerade auch bei kleinen Rohrdimensionen einen großen Kraftaufwand, um die Schutzrohranordnung zu installieren bzw. zu deinstallieren. Auch der sehr hohe Montageaufwand dämpft die Akzeptanz dieses ansonsten guten Konzepts.

Dementsprechend ist es die Aufgabe der vorliegenden Erfindung, den obigen Nachteilen des Standes der Technik so weit als möglich Abhilfe zu verschaffen. Insbesondere soll eine mit vergleichsweise geringen Mitteln erstellbare fortschrittliche Rohranordnung bereitgestellt werden, die insbesondere gut und leicht verschließbar, aber auch schonend zu den Leitungen bzw. elektrischen Kabeln ist, und einen verringerten Aufwand an Kunststoffmaterial erfordert.

Diese Aufgabe wird mittels einer Rohranordnung mit den im Patentanspruch 1 aufgeführten Merkmalen gelöst. Zweckmäßige Ausführungsformen gehen aus den Unteransprüchen hervor.

Die gemäß der vorliegenden Erfindung zu erzielenden Vorteile beruhen darauf, daß das gewellte Rohr der Rohranordnung mit Merkmalen gemäß der Erfindung an vorgebbaren Stellen mit Rohrabschnitten eingefaßt werden kann, wobei die Rohrabschnitte selbst Längsschlitze aufweisen, so daß die Rohrabschnitte, die den Schlitz im gewellten Rohr abdecken, auf dieses aufgesetzt werden können. Die Rohrabschnitte bleiben aufgrund ihrer Eigenelastizität auf dem gewellten Rohr und decken den Schlitz stellenweise ab. Der Rohrabschnitt, der ebenfalls bevorzugt mit Wellungen ausgebildet ist, greift in die Wellungen der Rohranordnung ein, wobei es jedoch nicht erforderlich, jedoch bevorzugt ist, daß die Wellungen des gewellten Rohres am Außenumfang dieses Rohres zu der Innenstruktur des bzw. der Rohrabschnitte passend ausgebildet sind. Erfindungsgemäß wird mittels zwei oder drei jeweils etwa 5 bis 10 cm langen Rohrabschnitten ein etwa 1 m langes Wellrohr in Bezug auf den Schlitz sicher verschlossen werden, ohne dieses Wellrohr zu versteifen, so daß damit im wesentlichen die Nachteile des oben erörterten Standes der Technik ausgeräumt sind. Zudem sind nur geringer Materialmehrmengen erforderlich und der Arbeitsaufwand bei der Herstellung und Verarbeitung einer solchen Rohranordnung ist leicht akzeptabel. Damit wird gemäß der Erfindung eine überraschend einfache und vorteilhafte Rohranordnung zum Schutz von elektrischen Leitungen, insbesondere in Kraftfahrzeugen, zur Verfügung gestellt.

Eine besonders vorteilhafte Ausführungsform gemäß der Erfindung ergibt sich, wenn das gewellte Rohr bzw. der Rohrabschnitt oder die Rohrabschnitte eine Verdrehsicherung aufweisen. Hierzu kann beispielsweise das gewellte Rohr am Außenumfang eine Struktur, bspw. einen Buckel oder eine Erhebung, aufweisen. Der Rohrabschnitt kann in einen sperrenden Eingriff mit dieser Struktur treten, so daß nach dem Auf- oder Einsetzen des Rohrabschnittes in Bezug auf das gewellte Rohr der Rohrabschnitt gegenüber dem Rohr nicht mehr verdreht werden kann. Auf diese Weise kann es verhindert werden, daß sich durch Vibrationen oder dergleichen in dem Motorraum eines Kraftfahrzeuges der Rohrabschnitt in Bezug auf den Schlitz des Wellrohres dreht, so daß der Schlitz im gewellten Rohr womöglich freigegeben wird.

Außerdem kann durch die Struktur des gewellten Rohres eine Fehljustierung bzw. Fehlmontage des Rohrabschnittes zum gewellten Rohr leicht verhindert werden.

Natürlich können die Rohrabschnitte auch am Innenumfang eine Struktur aufweisen, die sich beispielsweise in dem Schlitz des gewellten Rohres oder an einer anderen Öffnung oder Struktur des gewellten Rohres verfangen kann, um ein Verdrehen des Rohrabschnittes zum gewellten Rohr verhindern zu können. Wird der Rohrabschnitt in das gewellte Rohr eingesteckt, kann die Struktur des Rohrabschnittes auch an dessen Außenumfang ausgebildet sein.

Vorteilhafterweise sind die Rohrabschnitte in Axialrichtung so ausgebildet, daß Sie in Bezug auf das gewellte Rohr in einem Wellental des gewellten Rohres anfangen und enden. Auf diese Weise kann der Rohrabschnitt, nachdem er von außen auf das Wellrohr aufgeschnappt worden ist, in Axialrichtung nicht mehr beeinflußt werden, da der Anfang und das Ende des Rohrabschnittes in einem Wellental des Wellrohres verborgen sind.

Vorteilhafterweise kann in dem Bereich, in dem der Rohrabschnitt auf das Wellrohr aufgesetzt wird, eine Öffnung erschließbar angeordnet sein bzw. von vornherein angeordnet sein. Durch diese Öffnung, die bspw. in dem Bereich der Verdrehsicherung oder an der Schlitzung am Wellrohr in der Form einer Warze oder dgl. angeordnet sein kann, die durch Abschneiden geöffnet werden kann, können elektrische Leitungen herausgeführt werden, oder es kann eine Rohrabzweigung in diesem Bereich eingesetzt werden. Es ist auch möglich entsprechende Öffnungen etwa durch Schwächungslinien oder dgl. zu erschließen.

Eine weitere vorteilhafte Ausführungsform mit einer Ableitungsöffnung ergibt sich, wenn sowohl in dem gewellten Rohr als auch dem Rohrabschnitt ausgelassene Bereiche, evtl. Öffnungen oder dgl., vorgesehen sind, so daß nach dem Zusammenfügen der Rohranordnung mit Merkmalen gemäß der Erfindung eine Öffnung verbleibt, um entweder elektrische Leitungen herauszuführen oder einen anderen Rohrabschnitt anzuschließen, der ebenfalls gemäß der Erfindung ausgebildet sein kann. Wenn sowohl in dem Wellrohr als auch in dem Rohrabschnitt jeweils ein Ausschnitt vorgesehen ist, die nach dem Zusammensetzen eine verengte Öffnung ergeben, kann durch das Zusammensetzen ein Eingriffsorgan geschaffen werden, das in Ausnehmungen eines anzubauenden Rohrabschnittes eingreift, bspw. in die Wellungen einer anzubauenden Wellrohrabzweigung. Dabei kann bevorzugt beidseitig der Öffnung bzw. der Abzweigung ein Rohrabschnitt vorgesehen werden, um das Wellrohr gerade in dem Bereich der Abzweigung partiell zu stabilisieren.

Eine besonders vorteilhafte Ausführungsform ergibt sich, wenn ein Rohrabschnitt in Längs- bzw. Axialerstreckungsrichtung eine oder mehrere Versteifungen aufweist, die bei Anordnung des Rohrabschnitts am gewellten Rohr bzw. Wellrohr dieses versteifen. Zu diesem Zweck können bei einem derart ausgestalteten Rohrabschnitt bspw. partiell die Wellungen weggelassen sein, oder aber es können beim Herstellungsprozeß im Korrugator Versteifungen mit ausgeformt werden. Diese Art der Herstellung hat den Vorteil, daß im Bedarfsfalle, wenn es gewünscht ist, die Rohranordnung mit Merkmalen gemäß der Erfindung bereichsweise zu versteifen, einer oder mehrere entsprechende Rohrabschnitte an dem Wellrohr angeordnet werden, um dieses beispielsweise über einen gewissen Bereich, über den das Wellrohr in einem Motorraum nicht fixiert werden kann, selbsttragend verlegen zu können.

Bevorzugt kann an dem Wellrohr eine Markierung dort vorgesehen werden, wo ein Rohrabschnitt vorgesehen werden soll. Eine derartige Markierung kann beispielsweise in der Form eines aufgespritzten farbigen Tintenfleckes oder dgl. vorgesehen werden. Hier gibt es diverse Möglichkeiten zur Beschriftung und Markierung bis hin zur Verwendung eines Lasers. Besondere Vorteile sind auch mit einer Ausführungsform verbunden, bei der wenigstens das gewellte Rohr, ggfs. auch Rohrabschnitte in Axialrichtung mit Bereichen unterschiedlicher Wellungsabmessungen vorgesehen sind, um auf diese Weise Zonen mit unterschiedlicher Flexibität zu schaffen. So können besonders tiefe Wellungen dem Wellrohr der Anordnung gemäß der Erfindung zusätzliche Flexibilität verleihen, bzw. besonders flache Wellungen die Anordnung gemäß der Erfindung zonenweise relativ steif ausfallen lassen. Eine vergleichbare Wirkung läßt sich erzielen, wenn das Wellrohr in Längsrichtung Bereiche aufweist, die aus Materialien unterschiedlicher Flexibilität, Härte und/oder dgl. ausgebildet sind.

Vorteilhafterweise kann an dem gewellten Rohr und/oder den Rohrabschnitten jeweils ein Festlegungsbereich vorgesehen sein, der in Eingriff mit einer Halteeinrichtung bringbar ist. Dabei kann die Verdrehsicherung, die beispielsweise als Ausbuchtung an dem Außenumfang des Wellrohres vorgesehen sein kann, so ausgebildet sein, daß die Halteeinrichtung an dieser festlegbar ist. Dabei hat sich eine Ausführungsform als besonders vorteilhaft erwiesen, bei der eine Halteeinrichtung zwei zusammenlaufende Schenkel umfaßt, die mit korrespondierenden Abschnitten am Festlegungsbereich bzw. an der Verdrehsicherung zusammenwirken. In einem derartigen Fall kann beispielsweise die Verdrehsicherung in Radial- und/oder Axialrichtung des Wellrohres etwas länger ausgebildet sein als dies für die Absicherung des Rohrabschnittes prinzipiell erforderlich wäre. Hier kann nun eine entsprechende Halteeinrichtung zusätzlich aufgeklipst, aufgeschoben oder dgl. werden.

Eine weitere vorteilhafte Ausführungsform ergibt sich, wenn in dem Wellrohr und/oder den Rohrabschnitten Festlegungsbereiche mit einer Öffnung vorhanden sind, in die die Halteeinrichtung mit einem Verankerungsabschnitt eingesetzt wird, um die Halteeinrichtung über den Verankerungsabschnitt mit dem Wellrohr bzw. dem Rohrabschnitt zu verbinden, bspw. zu verrasten, verkleben oder dgl.

Es ist fraglos möglich, die obigen Ausführungsformen mit dem Festlegungsbereich und der Halteeinrichtung auch bei anderen Arten von Rohren zum Einsatz zu bringen. Insofern kann den damit verbundenen Merkmalen selbst die Qualität einer Erfindung zukommen.

Eine besonders vorteilhafte Ausführungsform gemäß der Erfindung ergibt sich, wenn die Rohranordnung mit Merkmalen gemäß der Erfindung mit einem Adaptionsabschnitt versehen wird, der die Kontour des gewellten Rohres wenigstens teilweise oder im wesentlichen an die Kontour eines Steckers anpaßt. So kann die Kontour eines Steckers bspw. oval sein, so daß der Adaptionsabschnitt an seinem einen Ende ebenfalls oval ausgebildet werden muß, so daß der Adaptionsabschnitt auf eine passende Struktur des Steckers, bspw. einen Hinterschnitt oder dgl. etwa mittels einer Wellung zum Aufschnappen gebracht werden kann. Natürlich kann auch hier verklebt oder reibgeschweißt werden, bzw. sonstwie eine Verbindung hergestellt werden. Der Adaptionsabschnitt kann dann mit dem gewellten Rohr in einen Eingriff gebracht werden, beispielsweise in dem ebenfalls Wellungen oder entsprechende Strukturen des Adaptionsabschnittes mit den Wellungen des Rohres in Eingriff treten.

Eine besonders zu bevorzugende Ausführungsform ergibt sich, wenn der Adaptionsabschnitt mittels eines Rohrabschnitts an das gewellte Rohr ansetzbar ist. Natürlich lassen sich gleichermaßen auch Teile von jeweils zwei Wellrohren auf diese Weise mittels eines Rohrabschnittes miteinander vereinigen.

Der Adaptionsabschnitt kann, wie bereits angedeutet, umfänglich sowohl geschlossen als auch geschlitzt sein. Auch das Wellrohr und damit der Rohrabschnitt können natürlich auch im Querschnitt vom Kreis abweichende Formen aufweisen, beispielsweise einen rechteckigen Querschnitt, einen oval Querschnitt oder dgl. aufweisen. Runde Querschnitte sind natürlich zu bevorzugen, wenn es darum geht, eine gleichmäßige Flexibilität in jeder Richtung gewährleisten zu wollen. Besondere Vorteile können sich ergeben, wenn der Adaptionsabschnitt durch eine eventuell auch verrastbare Struktur mit dem Wellrohr in einen Eingriff bringbar ist. Hier kann bspw. auch die ansonsten bspw. als Verdrehsicherung dienende bevorzugt erhabene Struktur dazu verwendet werden, um diese durch Verdrehen des Wellrohres gegenüber dem Adaptionsabschnitt in einen nur schwer lösbaren oder unlösbaren Eingriff zu bringen.

Bei sämtlichen Verbindungen zwischen einem Stecker und einer Rohranordnung gemäß der Erfindung bzw. einem Adaptionsabschnitt ist es möglich, sowohl eine lösbare Steckverbindung oder eine unlösbare Steckverbindung vorzusehen, bspw. indem diese durch Reibschweißen, Kleben oder dgl. festgesetzt wird.

Als besonderer Vorzug, der gemäß der vorliegenden Erfindung zu erzielen ist, ist zu erkennen, daß eine hinreichend stabile und gleichzeitig leicht zugängliche Schutzrohranordnung geschaffen werden kann, die mittels einer geringeren Anzahl von als Endlosmaterial herstellbaren Teilen produziert werden kann. So ist es im Stand der Technik bekannt, schellenartige Einrichtungen zum Anschließen oder Verschluß der Schlitzung zu verwenden, wobei derartige schellenartige Teile jedoch als Spritzgußteile ausgebildet sind und unakzeptabel hohe Kosten mit sich bringen. Demgegenüber ist es, wie bereits angedeutet, gemäß der vorliegenden Erfindung möglich, vorlaufend Wellrohre herzustellen, die mit einfachen Mitteln längs geschlitzt werden können, wobei Rohrabschnitte mit fix vorgegebenen Abmessungen korrespondierend ausgebildet werden können. Die Rohrabschnitte können gleichfalls als Endlos hergestelltes Wellrohr hergestellt werden, das ebenfalls lediglich geschlitzt werden muß. Diese Rohrabschnitte können somit die Schlitzung verschließen und sonst erforderliche, kostenaufwendige Spritzgußteile ersetzen.

Ähnliches gilt für den voranstehend vorgeschlagenen Adaptionsabschnitt, der ebenfalls durch Herstellung einer Endlosmaterialbahn und Vereinzelung hergestellt werden kann.

Nachfolgend wird die vorliegende Erfindung anhand von bevorzugten Ausführungsformen mit Merkmalen gemäß der Erfindung näher erläutert. Dabei werden unter Bezugnahme auf die beigefügten Darstellungen weitere Merkmale, Vorzüge und Zielsetzungen gemäß der vorliegenden Erfindung offenbart, in welchen:
- Fig. 1: einen Querschnitt durch ein Wellrohr mit Merkmalen gemäß der Erfindung zeigt;
- Fig. 2A-D: verschiedene Arten von Rohrabschnitten in einer Seitenansicht zeigt, während Fig. 2D eine Draufsicht auf die Rohre gemäß den Figuren 2A-D zeigt;
- Fig. 3: eine Anordnung von Rohren mit Merkmalen gemäß der Erfindung in einer schematischen Weise in einer Seitenansicht zeigt;
- Fig. 4A/ Fig. 4B: eine Ausführungsform zur Anbindung einer Rohrabzweigung in einer Seiten- und einer Draufsicht zeigt; wobei 4C eine Abwandlung der Ausführungsform gemäß den Fig. 4A und Fig. 4B darstellt.
- Fig. 5: die Ausführungsform gemäß Fig. 3 in einer beispielhaften Einbausituation;
- Fig. 6: eine Ausführungsform mit Adaptionsabschnitt teils in querschnittlicher und teils in seitlicher Ansicht; und
- Fig. 7: eine Alternative zu der Ausführungsform nach Fig. 6 in analogen Darstellungen.

In den Figuren sind gleiche oder wenigstens funktionsgleiche Bestandteile durch gleiche oder wenigstens ähnliche Bezugszeichen benannt.

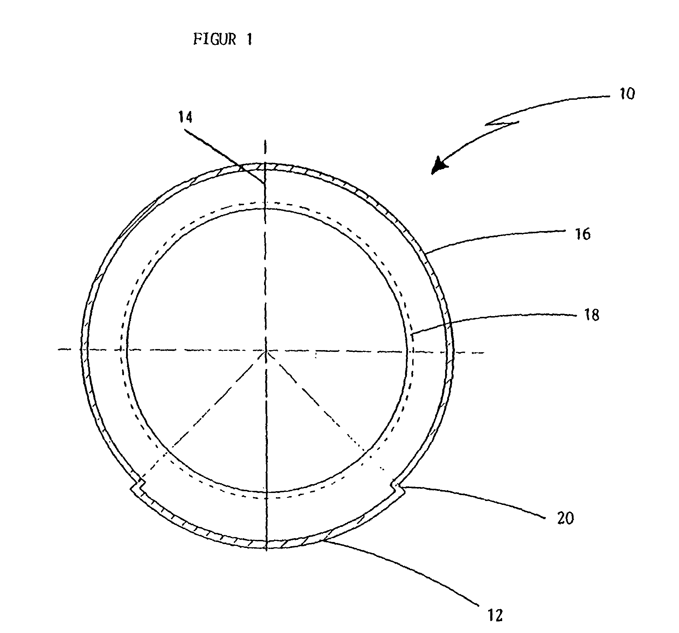

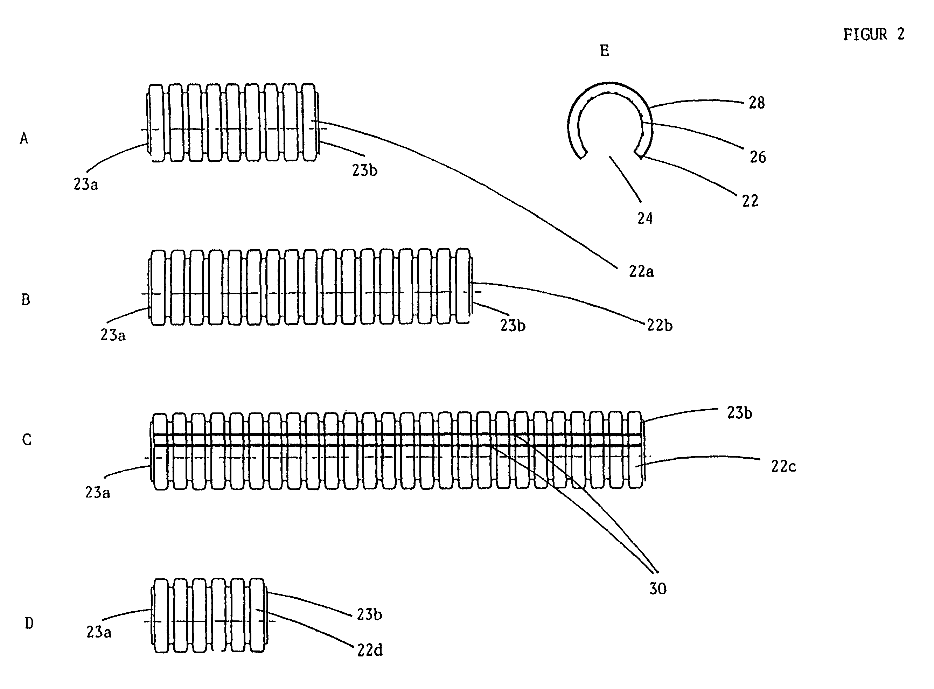

In Fig. 1 ist ein Wellrohr der Wellrohranordnung gemäß der vorliegenden Erfindung allgemein durch das Bezugszeichen 10 gekennzeichnet worden. Das in der Regel aus Kunststoff hergestellte Wellrohr 10 weist Wellenberge 16 und Wellentäler 18 auf, die den Außen- und den Innenumfang des Kunststoffwellrohres 10 bestimmen. Das Wellrohr 10 ist auf einer Seite mit einem Schlitz 14 versehen. Dem Schlitz 14 gegenüber ist eine Verdrehsicherung 12 ausgebildet, die in der Form einer Erhebung vorgesehen ist, die auf beiden Seiten jeweilige Anschlagschultern 20 aufweist. Soll das Wellrohr 10 stabilisiert werden, kann ein Rohrabschnitt (s. Fig. 2A bis 2E) auf das Rohr 10 aufgesteckt werden und stößt mit den Enden seiner Schenkel in Umfangsrichtung gegen die Schultern 20 des Wellrohres 10, um ein Verdrehen eines der Rohrabschnitte gemäß den Figuren 2A bis 2E gegenüber dem Schlitz 14 des Wellrohres 10 verhindern zu können.

Die Figuren 2A bis 2E dienen zur Beschreibung von Rohrabschnitten 22, wie sie in Figur 2E zusammenfassend bezeichnet sind. Die Fig. 2E läßt einen Rohrabschnitt 22 in Draufsicht erkennen, d.h. die Blickrichtung verläuft in Axialrichtung der in den Figuren 2A bis 2D abgebildeten Rohrabschnitte 22a bis 22d.

Der Rohrabschnitt 22 gemäß Fig. 2E weist einen klaffenden Längsschlitz 24 auf, dessen Form zu der Verdrehsicherung 12 gemäß Fig. 1 korrespondiert. Die Bezugszeichen 26 und 28 bezeichnen jeweils Wellentäler und Wellenberge, die der ebenfalls als Wellrohr ausgebildete Rohrabschnitt 22, das bevorzugt aus Kunststoff hergestellt ist, aufweist.

Den Fig. 2A bis 2D ist im wesentlichen zu entnehmen, daß die jeweiligen Rohrabschnitt 22a bis 22d jeweils mit einem Wellental enden, so daß, wenn der Rohrabschnitt mit dem Wellrohr 10 in Eingriff gebracht worden ist, in Axialrichtung nicht an dem Rohrabschnitt angegriffen werden kann, um dieses eventuell unbeabsichtigt aus seiner Funktionsposition am Wellrohr 10 entfernen zu können.

Der Rohrabschnitt gemäß Fig. 2C zeigt exemplarisch zwei Versteifungsrippen, die sich in Längsrichtung des Rohrabschnitts erstrecken, um den Rohrabschnitt versteifen zu können.

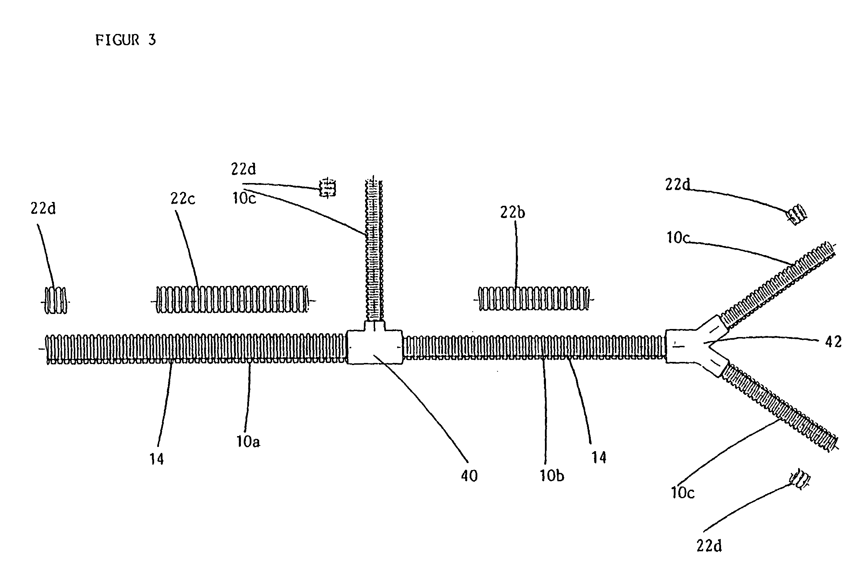

Die Fig. 3 zeigt eine Anordnung von mehreren Rohranordnungen gemäß der Erfindung, die über Verbindungsabschnitte 40, 42 miteinander verbunden sind. Die Verbindungsabschnitte 40, 42, d.h. eine Rohrweiche 40 und ein Y-Stück 42 können in der herkömmlichen Art und Weise ausgebildet sein, d.h., in der Form von Hälften, die über Rasterabschnitte miteinander verbunden werden können. Natürlich können die Hälften auch einseitig über ein Filmscharnier verbunden sein, so daß die Hälften zugeschwenkt und dann mittels Rasteinrichtungen geschlossen werden können. Natürlich können sie auch verklebt werden.

In dem Falle, daß mittels der in Fig. 3 gezeigten Anordnung ein Kabelbaum verlegt und verzweigt würde, kommen die Kabel in der Darstellung von links und werden in der Richtung nach rechts verzweigt bzw. abgeleitet. Entsprechend der Anzahl von Kabeln ist von rechts gesehen das Wellrohr 10a mit einem relativ großen Durchmesser ausgestaltet. Entlang des Wellrohres 10a verläuft ein Schlitz 14, der teilweise durch Rohrabschnitte 22c und/oder 22d verschlossen werden kann, wobei das Wellrohr 10a durch die Rohrabschnitt 22c und 22d zusammengehalten wird. In dem Zwischenraum zwischen den Rohrabschnitten 22c, 22d ist das Wellrohr nach wie vor äußerst flexibel, und, da entlang des Schlitzes 14 keinerlei Versteifungen bspw. von Verschlußeinrichtungen oder dgl. auftreten, klafft das Rohr 10 in den Bereichen, wo es von keinem Rohrabschnitt umschlossen wird, nicht auf.

Nach der ersten Rohrverzweigung 40 folgt ein weiteres Wellrohr 10b mit geringerem Durchmesser, das mit einem gleichermaßen mit geringerem Durchmesser ausgebildeten Rohrabschnitt 22b verschlossen und stabilisiert werden kann. Eine Abzweigung 10c wird auf der einen Seite durch die Einrichtung 40 geschlossen gehalten und kann im weiteren Verlauf durch einen anders bemessenen Rohrabschnitt 22d stabilisiert und verschlossen werden.

Entsprechend sind die jenseits der Y-Verzweigung vorgesehenen Rohrabschnitte 10c ausgebildet und werden für sich wiederum mit jeweiligen Rohrabschnitten 22d stabilisiert und verschlossen.

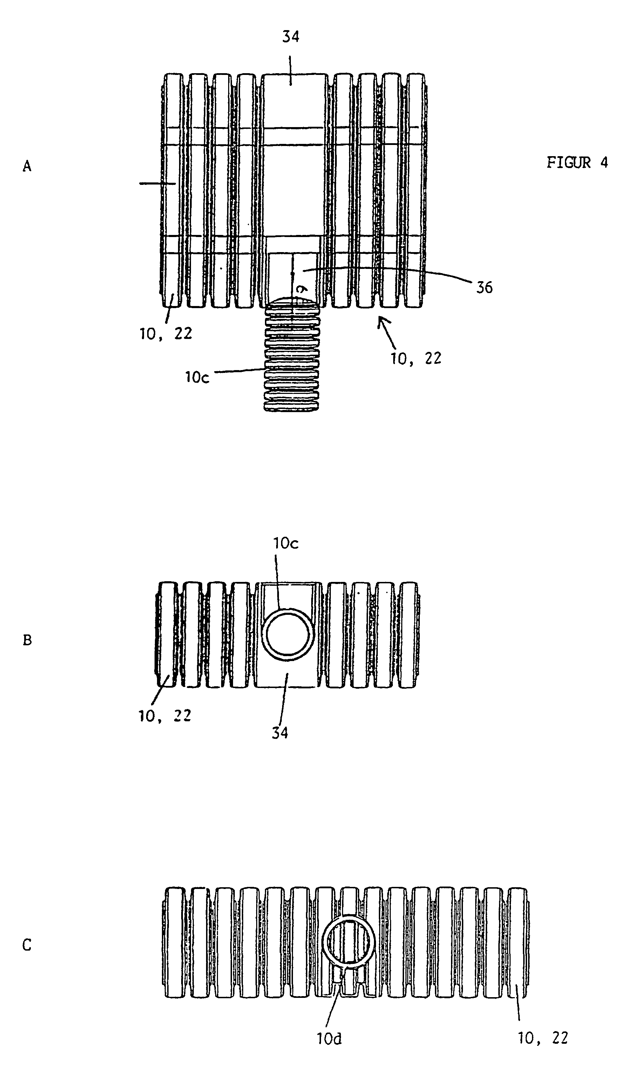

Eine mögliche Alternative zu der Ausführungsform gemäß Fig. 3 ergibt sich gemäß den Figuren 4A bis 4C. Wie zu erkennen ist, sind gemäß Fig. 4A das Wellrohr 10 und der Rohrabschnitt 22 zu einer Rohranordnung mit Merkmalen gemäß der Erfindung zusammengesetzt. Dabei sind beide Abschnitte mit einem glattwandigen Bereich 34 versehen, der durch entsprechende Ausbildung der Formbacken eines Korrugators hergestellt werden kann. In dem Bereich 34 kann sowohl in dem Wellrohr 10 als auch in dem Rohrabschnitt 22 jeweils eine Aussparung, Öffnung oder dgl. ausgebildet sein, die sich in der montierten Situation überlappen, um eine Ableitungsöffnung bzw. einen Ableitungsabschnitt 36 zu schaffen, in dem ein entsprechendes Rohr, insbesondere Wellrohr 10c, bevorzugt mit Merkmalen gemäß der Erfindung, eingesetzt werden kann. Dabei können die jeweiligen Randbereiche, die seitens des Wellrohrs 10 und des Rohrabschnitts 22 der Wellrohrableitung 10c zugeordnet sind, Eingriffsabschnitte bilden, die das Wellrohr 10c fixieren, und in ein Wellental dieses Wellrohres 10c eingreifen.

Die Fig. 4B zeigt die Anordnung gemäß Fig. 4A in einer Draufsicht auf die Rohrableitung bzw. das Wellrohr 10c.

Bei der Abwandlung gemäß Fig. 4C kann das Wellrohr 10 mit einer Ableitungserstreckung 10d ausgebildet sein, die eine Abzweigung bildet, an die ein Rohr, ein Wellrohr oder dgl. angeschlossen werden kann. Andererseits kann natürlich auch lediglich ein Aussicht in dem Wellrohr 10 und/oder in dem Rohrabschnitt 22 vorgesehen werden, indem eine Rohrabzweigung 10d eingesetzt werden kann. Hier gibt es diverse Möglichkeiten, die jedoch nicht im einzelnen ausgeführt werden sollen.

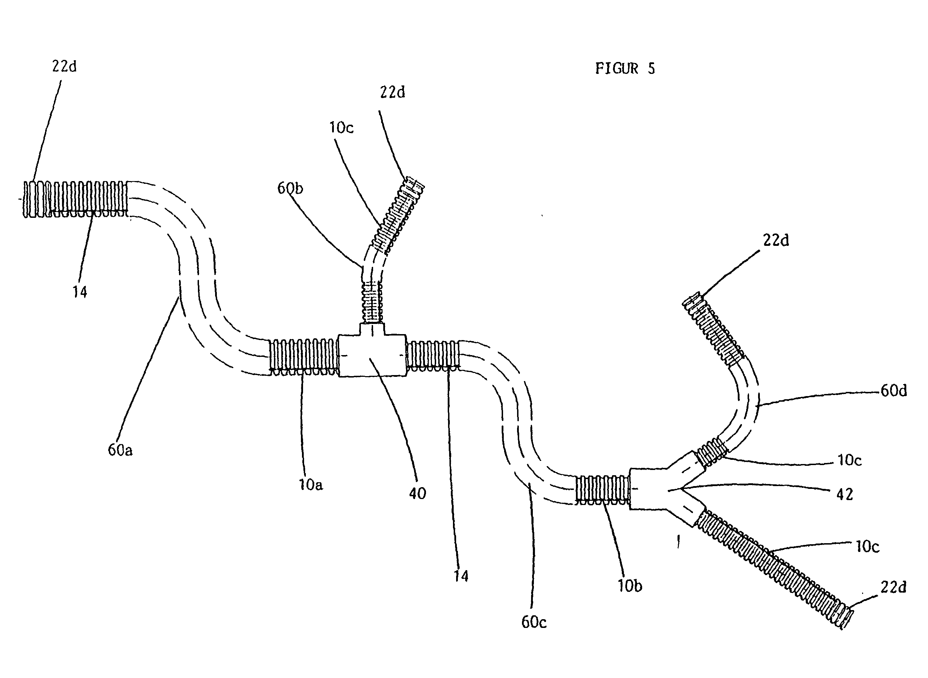

Die Figur 5 zeigt die Ausführungsform nach Figur 3 in einer montierten Einbausituation. Grundsätzlich sind die in Figur 5 gezeigten Bestandteile bereits unter Bezugnahme auf Figur 3 erörtert worden. Hinzuzufügen bleibt nur, daß in den Bereichen 60a, 60b, 60c und 60d die Rohre 10a, 10b, 10c gebogen sind, wie dies in einem Motorraum der Fall sein kann. Wie es zu erkennen ist, klaffen die Rohre nicht, wie es im Stand der Technik der Fall ist, in den Bereichen der Biegungen auf. In den Biegungsbereichen 60a, 60b, 60c, 60d können Rohrabschnitte insbesondere auch abschnittweise vorgesehen bzw. aufgesteckt werden, wordurch zwar eine leichte Versteifung auftritt, die jedoch nach wie vor noch eine gute Flexibilität ermöglicht, ohne daß es Knickstellen gibt und ohne daß der Schlitz 14 aufklafft.

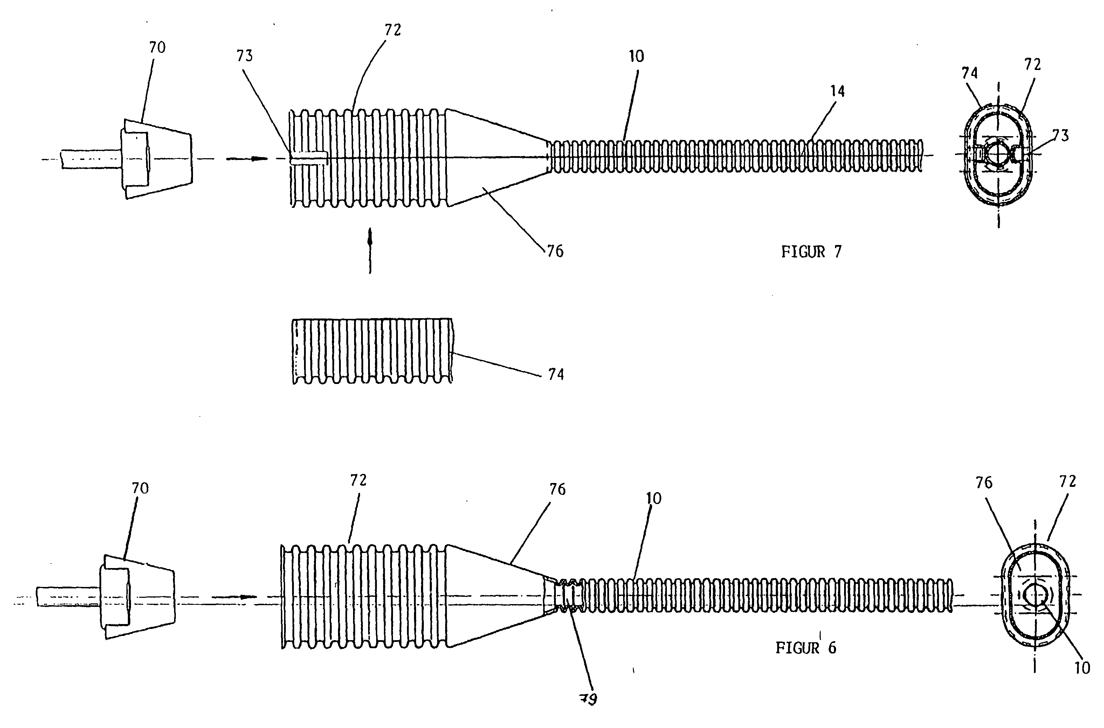

In Figur 6 wird ein Wellrohr 10 gezeigt, an dessen Ende ein Adaptionsabschnitt 76 angesetzt ist, das in ein ovales Wellrohr 72 übergeht. Die rechts gezeigte Draufsicht auf das ovale Wellrohr 72 läßt den Übergangsbereich des Adaptionsabschnitts 72 und mittig die Anschlußöffnung für das Wellrohr 10 erkennen. Der teils ausgeschnittene Darstellungsbereich 79 zeigt, daß das Wellrohr 10 am angrenzenden Rand des Adapationsabschnitts 76 in diesen eingesteckt ist.

Das ovale Wellrohr 72 wird auf einen Stecker 70 aufgesteckt, wobei dieser über eine Hinterschneidung oder eine andere Struktur mit dem Rohr 72 in einen Eingriff bringbar ist.

Alternativ kann das ovale Wellrohr gemäß der Figur 7 mit einem oder zwei Schlitzen 73 an dem dem Stecker 70 zugewandten Ende ausgebildet sein. Hier läßt sich das ovale Rohr 72 noch leichter in Eingriff mit dem Stecker 70 bringen. Für den Fall, daß diese Verbindung nicht widerstandsfähig genug ist, kann ein geschlitzter Rohrabschnitt 74 aufgesteckt werden, der zusätzlich Halt und Dichtigkeit mit sich bringen kann.

## Patentansprüche

1. Rohranordnung mit einem gewellten Rohr (10), das in Axialrichtung einen Schlitz (14) aufweist, mit wenigstens einem Rohrabschnitt (22) mit Wellungen, der mit dem gewellten Rohr C10) über einen Teilabschnitt in Axialrichtung in Eingriff bringbar ist, wobei der Rohrabschnitt einen Längsschlitz (24) aufweist, und so auf das gewellte Rohr aufsetzbar ist, das dessen Schlitz (14) abgedeckt ist, **dadurch gekennzeichnet, dass** der Rohrabschnitt eine Länge in Axialrichtung von etwa 5 bis 10 cm aufweist, und wobei zwei oder drei solcher Rohrabschnitte(22) auf etwa einen Meter oder laufenden Meter gewellten Rohres (10) aufgesetzt werden, um dessen Schlitz (14) zu verschließen.

2. Rohranordnung nach Anspruch 1, **dadurch gekennzeichnet, daß** das gewellte Rohr (10) und/oder der Rohrabschnitt (22) eine Verdrehsicherung (12, 20) aufweisen.

3. Rohranordnung nach Anspruch 2, **dadurch gekennzeichnet, daß** das gewellte Rohr am Außenumfang eine Struktur (12, 20) bspw. einen Buckel oder eine Erhebung aufweist, die wenigstens mit Bereichen des Rohrabschnitts in einen ein Verdrehen verhindernden Eingriff bringbar ist.

4. Rohranordnung nach einem der Ansprüche 2 oder 3, **dadurch gekennzeichnet, daß** der Rohrabschnitt (22) eine am Innenumfang ausgebildete Struktur aufweist, die mit dem gewellten Rohr (10) insbesondere dessen eventuell partiell verbreiterten Schlitz (14), in Eingriff bringbar ist.

5. Rohranordnung nach Anspruch 1, **dadurch gekennzeichnet, daß** der Rohrabschnitt (22) in Axialrichtung in einem Wellental des gewellten Rohres anfängt und einem anderen endet oder jeweils mit einem Wellental (23a, 23b) endet oder anfängt.

6. Rohranordnung nach Anspruch 1, **dadurch gekennzeichnet, daß** wenigstens eine Öffnung insbesondere in der Form eines ausgelassenen Bereiches in dem gewellten Rohr und/oder dem Rohrabschnitt vorgesehen ist, so, daß eine Ableitung bzw. Verzweigung vorsehbar ist, bzw. daß durch Zusammensetzen des Rohres (10) und des Rohrabschnitts (22) die Öffnung entsteht, wobei bevorzugt in der Öffnung ein Anschlußrohr anordenbar oder festlegbar ist.

7. Rohranordnung nach einem der Ansprüche 1 bis 6, **dadurch gekennzeichnet, daß** ein Rohrabschnitt (22) in Längs- und/oder Axialerstreckungsrichtung, eine oder mehrere Versteifungen (30) aufweist, die bei Anordnung des Rohrabschnitts am gewellten Rohr (10) dieses versteifen.

8. Rohranordnung nach einem der Ansprüche 1 bis 7, **dadurch gekennzeichnet, daß** an dem gewellten Rohr (10) und/oder dem Rohrabschnitt (22) korrespondierend in axialer Richtung Bereiche mit unterschiedlichen Wellungsformen bzw. Wellungsabmessungen vorgesehen sind und/oder, daß an dem gewellten Rohr und/oder dem Rohrabschnitt korrespondierend in axialer Richtung Bereiche aus Materialien unterschiedlicher Flexibilität, Härte und/oder dgl. vorgesehen sind, um Zonen mit unterschiedlicher Flexibilität zu schaffen.

9. Rohranordnung nach einem der Ansprüche 1 bis 8, **dadurch gekennzeichnet, daß** das gewellte Rohr (10) und/oder der Rohrabschnitt (22) einen Festlegungsbereich aufweist, der in Eingriff mit einer Halteeinrichtung ist.

10. Rohranordnung nach Anspruch 1 bis 9, **gekennzeichnet durch** einen Adaptionsabschnitt, der die Kontour des gewellten Rohres (10) an die Kontour eines Steckers anpaßt, wobei der Adaptionsabschnitt bevorzugt mittels eines Rohrabschnitts (22) an das gewellte Rohr (10) ansetzbar ist, wobei der Rohrabschnitt (22) insbesondere wenigstens den Schlitz des gewellten Rohres, oder teilweise einen Schlitz des Adaptionsabschnitts abdeckt.

11. Rohranordnung nach Anspruch 10, **dadurch gekennzeichnet, daß** der Adaptionsabschnitt in Eingriff mit der Struktur des gewellten Rohres (10) und/oder des Rohrabschnitts (22) bringbar ist, wobei bevorzugt der Adaptionsabschnitt in Axialrichtung geschlitzt ist.

12. Rohranordnung nach Anspruch 10, **dadurch gekennzeichnet, daß** das gewellte Rohr (10) wenigstens abschnittweise überlappend auf den Adaptionsabschnitt aufschiebbar oder aufsetzbar ist, wobei bevorzugt in der Gegend des Überlappungsabschnitts ein Rohrabschnitt aufsetzbar ist.

## Claims

1. Pipe arrangement comprising a corrugated pipe (10) which has a slot (14) in the axial direction and comprising at least one pipe section (22) with corrugations, which pipe section can be brought into engagement with the corrugated pipe (10) via a part-section in the axial direction, wherein the pipe section has a longitudinal slot (24) and can be placed on the corrugated pipe such that the slot (14) of the latter is covered, **characterized in that** the pipe section has a length in the axial direction of about 5 to 10 cm, and wherein two or three such pipe sections (22) are placed on a corrugated pipe (10) of one or more metres in order to close the slot (14) thereof.

2. Pipe arrangement according to Claim 1, **characterized in that** the corrugated pipe (10) and/or the pipe section (22) have an anti-rotation device (12, 20).

3. Pipe arrangement according to Claim 2, **characterized in that** the corrugated pipe has on the outer circumference a structure (12, 20), for example a projection or a shoulder, which can be brought into engagement at least with regions of the pipe section in a manner such that rotation is prevented.

4. Pipe arrangement according to either of Claims 2 and 3, **characterized in that** the pipe section (22) has a structure formed on the inner circumference which can be brought into engagement with the corrugated pipe (10), in particular with the slot (14) thereof which may be widened in parts.

5. Pipe arrangement according to Claim 1, **characterized in that** in an axial direction the pipe section (22) begins in one corrugation trough of the corrugated pipe and ends in another or respectively ends or begins with a corrugation trough (23a, 23b).

6. Pipe arrangement according to Claim 1, **characterized in that** there is at least one opening, in particular in the form of an omitted region in the corrugated pipe and/or the pipe section, so that a derivation or branching-off can be provided, or **in that** the opening is produced by assembly of the pipe (10) and pipe section (22), wherein a connecting pipe can preferably be arranged or fastened in the opening.

7. Pipe arrangement according to one of Claims 1 to 6, **characterized in that** a pipe section (22) has in the longitudinal and/or axial direction one or more stiffening members (30) which stiffen the corrugated pipe (10) when the pipe section is arranged on the latter.

8. Pipe arrangement according to one of Claims 1 to 7, **characterized in that** regions with different corrugation shapes or corrugation sizes are provided on the corrugated pipe (10) and/or the pipe section (22) in a corresponding manner in the axial direction, and/or **in that** regions made of materials of different flexibility, hardness and/or the like are provided on the corrugated pipe and/or the pipe section in a corresponding manner in the axial direction, in order to create zones of different flexibility.

9. Pipe arrangement according to one of Claims 1 to 8, **characterized in that** the corrugated pipe (10) and/or the pipe section (22) has a fastening region which is in engagement with a retaining device.

10. Pipe arrangement according to Claims 1 to 9, **characterized by** an adaptation section which adapts the contour of the corrugated pipe (10) to the contour of a plug, wherein the adaptation section can be fitted on the corrugated pipe (10) preferably by means of a pipe section (22), wherein the pipe section (22) in particular covers at least the slot of the corrugated pipe or partially covers a slot of the adaptation section.

11. Pipe arrangement according to Claim 10, **characterized in that** the adaptation section can be brought into engagement with the structure of the corrugated pipe (10) and/or of the pipe section (22), wherein the adaptation section preferably has a slot in the axial direction.

12. Pipe arrangement according to Claim 10, **characterized in that** the corrugated pipe (10) can be pushed or placed onto the adaptation section in a manner such that it overlaps at least in some sections, wherein a pipe section can preferably be placed on in the region of the overlapping section.

## Revendications

1. Agencement de tube avec un tube ondulé (11) qui présente une fente (14) dans la direction axiale, avec au moins un tronçon de tube (22) avec des ondulations, qui peut être amené en engagement avec le tube ondulé (10) par un tronçon partiel, dans la direction axiale, le tronçon de tube présentant une fente longitudinale (24) et pouvant être ainsi placé sur le tube ondulé de manière que sa fente (14) soit recouverte, **caractérisé en ce que** le tronçon de tube présente, dans la direction axiale, une longueur d'environ 5 à 10 cm, et deux ou trois de ces tronçons de tube (22) sont placés sur environ un mètre ou mètre courant de tube ondulé (10), pour fermer sa fente (14).

2. Agencement de tube selon la revendication 1, **caractérisé en ce que** le tube ondulé (10) et/ou le tronçon de tube (22) présentent un blocage en rotation (12, 20).

3. Agencement de tube selon la revendication 2, **caractérisé en ce que** le tube ondulé présente, sur le pourtour extérieur, une structure (12, 20), par exemple un bossage ou un relief, qui peut être amenée en engagement empêchant une rotation, au moins avec des zones du tronçon de tube.

4. Agencement de tube selon l'une des revendications 2 ou 3, **caractérisé en ce que** le tronçon de tube (22) présente une structure réalisée sur le pourtour intérieur qui peut être amenée en engagement avec le tube ondulé (10), en particulier avec sa fente (14) éventuellement partiellement élargie.

5. Agencement de tube selon la revendication 1, **caractérisé en ce que** le tronçon de tube (22) commence, dans la direction axiale, dans un creux d'onde du tube ondulé et se termine dans un autre, ou se termine ou commence dans chaque cas par un creux d'onde (23a, 23b).

6. Agencement de tube selon la revendication 1, **caractérisé en ce qu'**au moins une ouverture, en particulier sous la forme d'une zone omise, est prévue dans le tube ondulé et/ou le tronçon de tube, de manière à pouvoir prévoir une dérivation ou embranchement, ou **en ce que** par assemblage du tube (10) et du tronçon de tube (22) il se forme l'ouverture, un tube de raccordement pouvant être disposé ou fixé de préférence dans l'ouverture.

7. Agencement de tube selon l'une des revendications 1 à 6, **caractérisé en ce qu'**un tronçon de tube (22) présente, dans la direction longitudinale et/ou la direction axiale, un ou plusieurs renforts (30) qui rigidifient celui-ci lorsque le tronçon de tube est placé sur le tube ondulé (10).

8. Agencement de tube selon l'une des revendications 1 à 7, **caractérisé en ce que** sur le tube ondulé (10) et/ou le tronçon de tube (22) sont prévues en correspondance, dans la direction axiale, des zones avec des formes d'ondulation ou des dimensions d'ondulation différentes et/ou **en ce que** sur le tube ondulé et/ou le tronçon de tube sont prévues en correspondance, dans la direction axiale, des zones de matières de flexibilité, dureté et/ou similaire différentes, afin de réaliser des zones de flexibilité différente.

9. Agencement de tube selon l'une des revendications 1 à 8, **caractérisé en ce que** le tube ondulé (10) et/ou le tronçon de tube (22) présentent une zone de fixation qui est en prise avec un dispositif de retenue.

10. Agencement de tube selon les revendications 1 à 9, **caractérisé par** un tronçon d'adaptation qui adapte le contour du tube ondulé (10) au contour d'un connecteur, le tronçon d'adaptation pouvant être placé de préférence, au moyen d'un tronçon de tube (22), sur le tube ondulé (10), le tronçon de tube (22) recouvrant en particulier au moins la fente du tube ondulé, ou en partie une fente du tronçon d'adaptation.

11. Agencement de tube selon la revendication 10, **caractérisé en ce que** le tronçon d'adaptation peut être amené en engagement avec la structure du tube ondulé (10) et/ou du tronçon de tube (22), le tronçon d'adaptation étant fendu de préférence dans la direction axiale.

12. Agencement de tube selon la revendication 10, **caractérisé en ce que** le tube ondulé (10) peut être enfilé ou placé sur le tronçon d'adaptation, de manière à le recouvrir au moins en partie, un tronçon de tube pouvant être placé de préférence dans la région du tronçon de recouvrement.
